# EUROPÄISCHE PATENTANMELDUNG

(11) **EP 2 141 491 A1**
(43) Veröffentlichungstag der Anmeldung: **06.01.2010**
(21) Anmeldenummer: 08011919.1
(22) Anmeldetag: 02.07.2008
(51) Int. Cl.: G01N 27/00, G01N 27/414

(54) **Gassensor**

(71) Anmelder: Micronas GmbH, 79108 Freiburg i. Br. (DE)
(72) Erfinder: Senft, Christoph, 80337 München (DE)
(74) Vertreter: Huwer, Andreas

(57) **Zusammenfassung**

Ein Gassensor (1) weist mindestens eine gassensitive, elektrisch leitfähige Schicht (7) auf, die einen mit dem Zielgas in Kontakt bringbaren Oberflächenbereich (9) hat, in dem die Austrittsarbeit von der Konzentration des damit in Kontakt stehenden Zielgases abhängig ist. Zumindest ein elektrischer Potentialsensor ist über einen Luftspalt (8) kapazitiv an den Oberflächenbereich (9) gekoppelt. Der Oberflächenbereich (9) ist durch mindestens eine Aussparung strukturiert, in der ein elektrisch leitend mit der gassensitiven Schicht (7) verbundenes flächiges Werkstoffelement (18) angeordnet ist, dessen Werkstoff sich von dem der gassensitiven Schicht (7) unterscheidet und ein Metall und/oder eine ein Metall enthalte chemische Verbindung umfasst.

## Beschreibung

Die Erfindung betrifft einen Gassensor mit mindestens einer gassensitiven, elektrisch leitfähigen Schicht, die einen mit einem Zielgas in Kontakt bringbaren Oberflächenbereich aufweist, in dem die Austrittsarbeit von der Konzentration des damit in Kontakt stehenden Zielgases abhängig ist, und mit zumindest einem über einen Luftspalt kapazitiv an den Oberflächenbereich gekoppelten elektrischen Potentialsensor.

Aus DE 43 33 875 C2 ist ein derartiger Gassensor zur Messung der Konzentration von Wasserstoffgas bekannt. Der Gassensor hat ein Silizium-Substrat, in das als Potentialsensor ein Feldeffekttransistor mit einer Drain, einer Source und einem dazwischen befindlichen Kanalbereich integriert ist. Auf dem Kanalbereich ist eine elektrische Isolationsschicht und auf dieser eine Gateelektrode angeordnet. Seitlich neben der Gateelektrode ist eine Sensorelektrode vorgesehen, die einstückig mit der Gateelektrode zu einem supended Gate verbunden ist. An ihrer dem Substrat zugewandten Unterseite ist die Sensorelektrode mit einer gassensitiven Schicht beschichtet, die über den Luftspalt kapazitiv an die Source gekoppelt ist. Ein dem Substrat zugewandter Oberflächenbereich der gassensitiven Schicht ist mit Wasserstoffgas in Kontakt bringbar, das beim Kontaktieren des Oberflächenbereichs an diesen adsorbiert. Bei einer Änderung der Konzentration des Wasserstoffgases verändert sich die Austrittsarbeit in dem Oberflächenbereich der gassensitiven Schicht. Da die Sensorelektrode kapazitiv an den Oberflächenbereich gekoppelt und mit der Gateelektrode verbunden ist, verändert sich dabei auch das elektrische Potential an der Gateelektrode. In Abhängigkeit von der Potentialänderung wird der Stromfluss zwischen Drain und Source gesteuert.

In normaler Raumluft ist an der Oberfläche der gassensitiven Schicht eine dünne Schicht Luftsauerstoff dissoziativ adsorbiert, d.h. als Sauerstoffatome, nicht als Sauerstoffmoleküle, wie sie in der Luft vorkommen. Wenn das Zielgas in die Umgebung der gassensitiven Schicht kommt, findet zunächst eine Adsorption des Zielgases an der Oberfläche statt, wobei das Zielgas teilweise den an der Oberfläche adsorbierten Luftsauerstoff verdrängt und dessen Adsortionsplätze einnimmt. Beide Effekte, Adsorption des Zielgases und Reduktion des Sauerstoffbelegung tragen additiv zur Änderung der Oberflächen-Austrittsarbeit bei. Gleichzeitig setzt aber an der Oberfläche, gefördert durch die katalytische Wirkung der gassensitiven Schicht, eine Reaktion zwischen Wasserstoff und Sauerstoff ein, bei der Wasser gebildet wird. Bei niedrigen Temperaturen unter ca. 60°C wird dadurch allmählich nur die Wasserstoffbedeckung an der Oberfläche verringert. Dieser Wasserstoffverbrauch wird durch anhaltende neue Adsorption von Wasserstoff aus der Gasphase kompensiert, so dass ein stabiles Messsignal gewährleistet ist. Bei höheren Temperaturen über ca. 60°C läuft die Reaktion so schnell ab, dass dadurch die Wasserstoffadsorption den Wasserstoffverbrauch durch die Oberflächenreaktion nicht mehr vollständig kompensieren kann und zusätzlich auch die Wasserstoffkonzentration in der unmittelbaren Umgebung der gassensitiven Schicht verringert wird. Dadurch kann die Sauerstoffbedeckung der Oberfläche wieder zunehmen. Alle drei Effekte verschieben die Austrittsarbeit in entgegengesetzte Richtung. Diese Reaktion kann je nach Temperatur der gassensitiven Schicht über Stunden oder auch in Sekunden stattfinden, so dass das Messsignal stark gestört werden kann.

Aufgabe der Erfindung ist es, einen Gassensor der eingangs genannten Art zu schaffen, der eine hohe Messgenauigkeit ermöglicht.

Diese Aufgabe wird dadurch gelöst, dass der Oberflächenbereich durch mindestens eine Aussparung strukturiert ist, in der ein elektrisch leitend mit der gassensitiven Schicht verbundenes flächiges Werkstoffelement angeordnet ist, dessen Werkstoff sich von dem der gassensitiven Schicht unterscheidet und mindestens ein Metall und/oder mindestens eine ein Metall enthalte chemische Verbindung umfasst.

Überraschender Weise hat sich herausgestellt, dass durch diese Strukturierung die gassensitive Schicht soweit stabilisiert wird, dass das Wechselspiel der Reaktionen des zu messenden Zielgases mit dem Oberflächen- und Luftsauerstoff reduziert oder sogar gestoppt werden kann. Die chemische Verbindung ist vorzugsweise ein Oxid. Die gassensitive Schicht besteht vorzugsweise aus Metall, insbesondere aus Platin und/oder Palladium.

Versuche haben ergeben, dass das Messsignal des Gassensors besonders gut stabilisiert wird, wenn das mindestens eine Metall Silber und/oder Kupfer umfasst.

Das mindestens eine Metall kann aber auch Eisen, Zinn, Blei, Nickel, Zink und/oder Kobalt umfassen. Diese Metalle sind in der elektrochemischen Spannungsreihe zu Silber und Kupfer benachbart.

Bei einer bevorzugten Ausgestaltung der Erfindung ist der mit dem Zielgas in Kontakt bringbare Oberflächenbereich der gassensitiven Schicht größer als 1%, gegebenenfalls größer als 5% und insbesondere größer als 10% der mit dem Zielgas in Kontakt bringbaren Oberfläche des mindestens einen innerhalb der mindestens einen Aussparung befindlichen Werkstoffelements. Ein zu kleiner mit dem Zielgas in Kontakt bringbarer Oberflächenbereich der gassensitiven Schicht führt an der Oberfläche zu einer geringen Zielgasadsorption, welche aber entscheidend für die Zielgasdetektion ist.

Vorteilhaft ist, wenn die mit dem Zielgas in Kontakt bringbare Oberfläche des mindestens einen innerhalb der mindestens einen Aussparung befindlichen Werkstoffelements größer ist als 0,001%, gegebenenfalls größer ist als 0,1% und insbesondere größer ist als 10% des mit dem Zielgas in Kontakt bringbaren Oberflächenbereichs (9) der gassensitiven Schicht. Ist der mit dem Zielgas in Kontakt bringbare Oberflächenbereich des Werkstoffelements zu klein, reduziert sich die stabilisierende Wirkung des mindestens einen Werkstoffelements.

Zweckmäßigerweise ist der mit dem Zielgas in Kontakt bringbare Oberflächenbereich derart strukturiert, dass der Oberflächenbereich an keiner Stelle weiter als 500 µm, gegebenenfalls weiter als 300 µm und insbesondere weiter als 100 µm von dem mindestens einen Werkstoffelement entfernt ist. Dadurch wird eine wirkungsvolle Stabilisierung des Messsignals des Gassensors ermöglicht.

Bevorzugt weist die aus dem Oberflächenbereich und dem mindestens einen Werkstoffelement gebildete Struktur mindestens zwei übereinstimmende Einheitsstrukturbereiche auf, die seitlich aneinander angrenzen und jeweils mindestens ein Werkstoffelement und einen Abschnitt des Oberflächenbereichs der gassensitiven Schicht umfassen. Dabei ist es sogar möglich, dass die Struktur aus einer Vielzahl solcher Einheitsstrukturbereiche gebildet ist, die in einer oder mehreren Reihen matrixförmig nebeneinander angeordnet sind.

Vorteilhaft ist, wenn mindestens zwei der Werkstoffelemente durch einen dazwischen befindlichen Teilbereich der gassensitiven Schicht seitlich voneinander beabstandet sind, und wenn der Abstand der Werkstoffelemente mindestens 50 nm, gegebenenfalls mindestens 75 nm und vorzugsweise mindestens 100 nm beträgt. Dabei ist es sogar möglich, dass die Werkstoffelemente voneinander getrennt sind, indem sie beispielsweise vollständig von der gassensitiven Schicht umrenzt werden. Die an die gassensitive Schicht angrenzende Außenkontur der Werkstoffelemente ist bevorzugt so gewählt, dass die Grenzlinie, entlang der die Werkstoffelemente an die gassensitive Schicht angrenzen, möglichst kurz ist. Das kann insbesondere dadurch erreicht werden, dass die Werkstoffelemente kreisscheibenförmig ausgestaltet sind.

Bei einer bevorzugten Ausführungsform der Erfindung beträgt die Dicke der flächigen Werkstoffelemente mindestens das 0,1-fache Dicke einer Monolage und höchstens 10 µm. Versuche haben ergeben, dass mit einer Schichtdicke von 10 nm mit einem flächigen Werkstoffelement aus Kupfer oder Kupferoxid eine gute Stabilisierung des Messsignals ereicht werden kann.

Bei einer möglichen Ausgestaltung der Erfindung ist das mindestens eine Werkstoffelement auf der gassensitiven Schicht angeordnet. Es ist aber auch eine umgekehrte Anordnung möglich, bei welcher die gassensitive Schicht auf einer Metallschicht angeordnet ist, wobei mindestens ein nicht von der gassensitiven Schicht überdeckter Teilbereich der Metallschicht das mindestens eine Werkstoffelement bildet. Bei der Herstellung des Gassensors braucht dann nur eine der beiden aufeinander liegenden Schichten strukturiert zu werden. Es ist aber auch eine eingebettete Struktur möglich, bei der das mindestens eine Werkstoffelement vollständig in der wenigstens einen Aussparung der gassensitiven Schicht angeordnet ist.

Vorteilhaft ist, wenn zwischen dem mindestens einen Werkstoffelement und der gassensitiven Schicht eine Haftvermittlerschicht angeordnet ist. Dadurch kann eine bessere Haftung des mindestens einen Werkstoffelements an der gassensitiven Schicht erreicht werden. Die Haftvermittlerschicht ist bevorzugt derart strukturiert, das sie die gassensitive Schicht in den Aussparungen nicht überdeckt.

Erwähnt werden soll noch, dass der Werkstoff des mindestens einen Werkstoffelements unter Gasexposition langzeitstabil sein sollte, vorzugsweise bei Temperaturen bis ca. 180 °C. Insbesondere wenn das Zielgas Wasserstoff ist, sollte das mindestens eine Werkstoffelement auch gegen Feuchte beständig sein. Ferner darf das mindestens eine Werkstoffelement die Änderung der Austrittsarbeit der gassensitiven Schicht bei Kontakt mit dem Zielgas nicht unterdrücken.

Bei einer vorteilhaften Ausgestaltung der Erfindung ist der Potentialsensor ein Feldeffekttransistor, der ein Substrat aufweist auf dem eine Drain und eine Source angeordnet sind, wobei zwischen Drain und Source ein Kanalbereich gebildet ist, wobei der Kanalbereich direkt über den Luftspalt oder indirekt über eine mit dem Kanalbereich zusammenwirkende Gateelektrode und eine mit der Gateelektrode leitend verbundene Sensorelektrode kapazitiv an den Oberflächenbereich der gassensitiven Schicht gekoppelt ist. Der Gassensor kann also einen SGFET und/oder einen CCFET als Potentialsensor aufweisen.

Bei einer anderen Ausgestaltung der Erfindung ist der Gassensor als Kelvinsonde ausgestaltet, bei welcher der Potentialsensor über eine durch den Luftspalt von dem Oberflächenbereich der gassensitiven Schicht beabstandete, auf die gassensitive Schicht zu- und von dieser wegbewegbaren Elektrode kapazitiv an den Oberflächenbereich der gassensitiven Schicht gekoppelt ist. Eine solche Kelvinsonde kommt bevorzugt bei Laboruntersuchungen zur Anwendung.

Nachfolgend sind Ausführungsbeispiele der Erfindung anhand der Zeichnung näher erläutert. Es zeigt:
- Fig. 1: einen Querschnitt durch einen Gassensor, der einen SGFET aufweist, dessen Kanalbereich über einen Luftspalt kapazitiv an eine gassensitive Schicht gekoppelt ist,
- Fig. 2: einen Querschnitt durch einen Gassensor, der einen CCFET aufweist, dessen Sensorelektrode über einen Luftspalt kapazitiv an eine gassensitive Schicht gekoppelt ist,
- Fig. 3.: einen Querschnitt durch einen als Kelvinsonde ausgestalteten Gassensor,
- Fig. 4: eine Aufsicht auf ein erstes Ausführungsbeispiel einer durch Aussparungen strukturierten gassensitiven Schicht,
- Fig. 5: eine Aufsicht auf ein zweites Ausführungsbeispiel einer durch Aussparungen strukturierten gassensitiven Schicht,
- Fig.6: eine graphische Darstellung des Messsignals eines Wasserstoff-Gassensors und der Wasserstoffkonzentration in der Umgebung des Gassensors, wobei auf der Abszisse die Zeit t in Sekunden und auf der Ordinate links die Amplitude des Messsignals und rechts die Wasserstoffkonzentration aufgetragen sind,
- Fig. 7 bis 9: Teilquerschnitte durch ein Trägerteil, auf dem eine strukturierte gassensitive Schicht angeordnet ist, und
- Fig. 10: eine Aufsicht auf ein drittes Ausführungsbeispiel einer durch Aussparungen strukturierten gassensitiven Schicht.

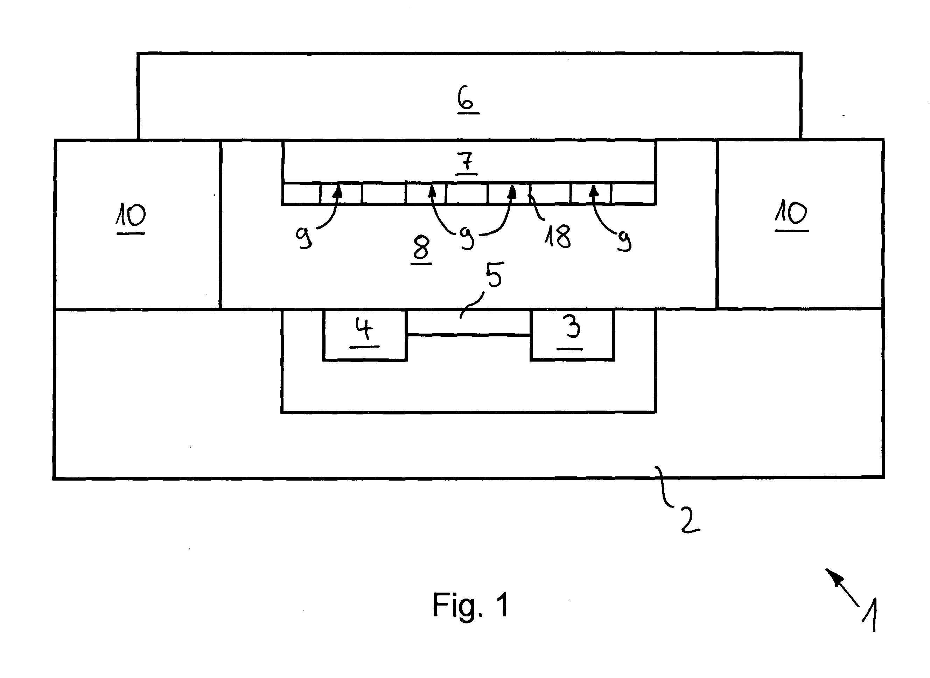

Ein in Fig. 1 im Ganzen mit 1 bezeichneter Gassensor weist ein Substrat 2 auf, auf dem in einer n-dotierten Transistorwanne eine Drain 3 und eine Source 4 angeordnet ist. Die Drain 3 und die Source 4 können beispielsweise aus p-dotiertem Silizium bestehen. Die Drain 3 ist über elektrische Leiterbahnen mit einem in der Zeichnung nicht näher dargestellten Drain-Anschluss verbunden. In entsprechender Weise ist die Source 4 mit einem Source-Anschluss verbunden. Zwischen Drain 3 und Source 4 ist in dem Substrat 2 ein Kanalbereich 5 gebildet, auf dem eine elektrisch isolierende Dünnoxidschicht oder ein Nitrid angeordnet ist, die bzw. das als Gatedielektrikum dient.

Über dem Kanalbereich 5 ist an einem Trägerteil 6 eine gassensitive Schicht 7 angeordnet, die beispielsweise aus einem Edelmetall, insbesondere aus Platin oder Palladium besteht und durch einen Luftspalt 8 von dem Kanalbereich 5 beabstandet ist. Ein dem Kanalbereich 5 zugewandter Oberflächenbereich 9 der gassensitive Schicht 7 ist über den Luftspalt 8 kapazitiv an den dem Kanalbereich 5 gekoppelt.

Das Trägerteil 6 ist beidseits der gassensitiven Schicht 7 über eine elektrische Isolationsschicht 10 derart mit dem Substrat 2 verbunden, dass das Trägerteil 6 und die gassensitive Schicht 7 ein Suspended Gate bilden.

Der Luftspalt 8 ist über mindestens eine in der Zeichnung nicht näher dargestellte Öffnung mit der den Gassensor 1 umgebenden Atmosphäre verbunden. Über diese Öffnung kann der Oberflächenbereich 9 der gassensitiven Schicht 7 mit einem zu detektierenden Zielgas, nämlich Wasserstoff, in Kontakt gebracht werden. Bei einem Kontakt mit dem Oberflächenbereich 9 adsorbiert das Zielgas an dem Oberflächenbereich 9. Dabei verändert sich in dem Oberflächenbereich 9 die Austrittsarbeit, was in einer Veränderung des elektrischen Potentials in dem Kanalbereich 5 führt.

Bei dem Ausführungsbeispiel nach Fig. 1 ist der Kanalbereich 5 offen ausgebildet (ISFET) und über das Dünnschichtoxid und den Luftspalt 8 direkt an die gassensitive Schicht 7 kapazitiv gekoppelt. Deutlich ist erkennbar, dass der Kanalbereich 5 an der der gassensitiven Schicht 7 gegenüber liegenden Seite des Luftspalts 8 angeordnet ist.

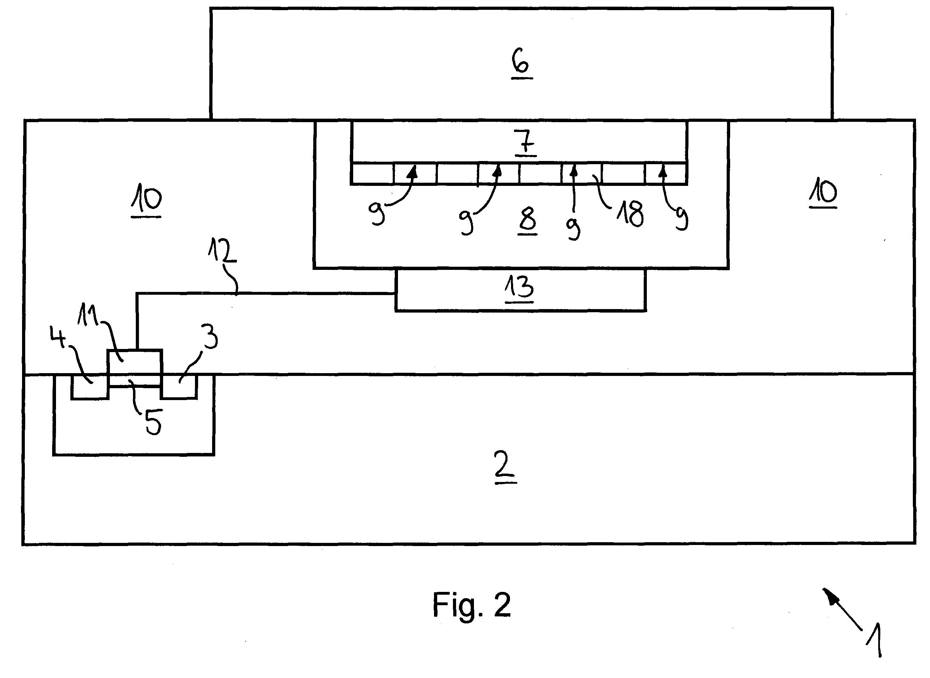

Bei dem Ausführungsbeispiel nach Fig. 2 ist der Feldeffekttransistor als CCFET ausgestaltet, bei dem der Kanalbereich 5 seitlich neben der gassensitiven Schicht 7 in dem Substrat 2 angeordnet und mit einer Gateelektrode 11 abgedeckt ist. Zur kapazitiven Ankopplung des Kanalbereichs 5 an die gassensitive Schicht 7 ist die Goteelektrode 11 über eine elektrische Verbindungsleitung 12 mit einer Sensorelektrode 13 verbunden, die an der dem Oberflächenbereich 9 der gassensitiven Schicht 7 gegenüberliegenden Seite des Luftspalts 8 auf der auf dem Substrat 2 befindlichen Isolationsschicht 10 angeordnet ist. Die Isolationsschicht 10 kann beispielsweise eine SiO₂-Schicht sein. Der Aufbau des Suspended Gates des SGFET entspricht dem in Fig. 1.

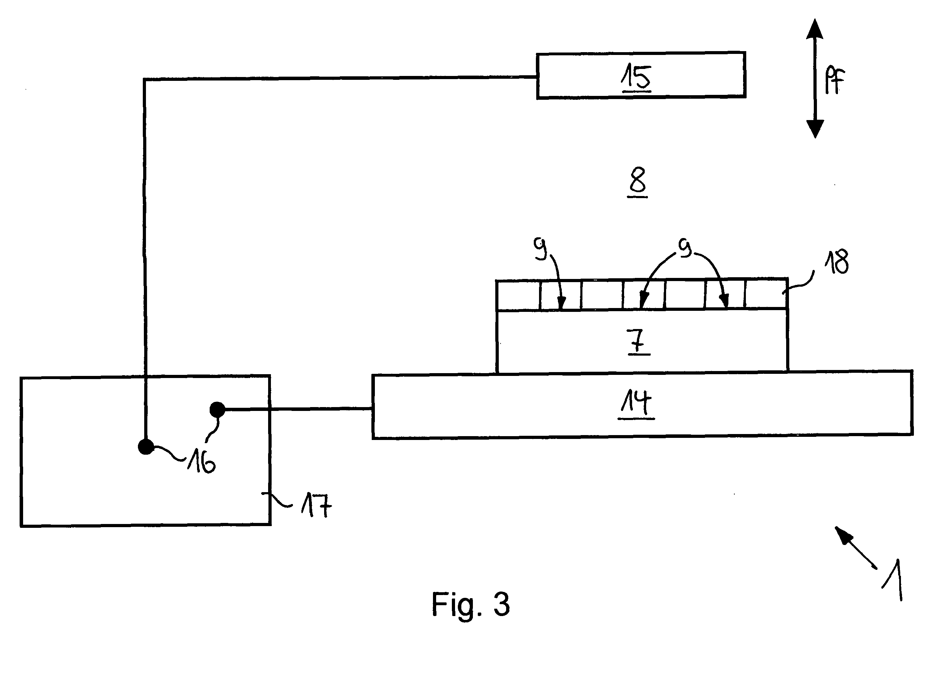

Bei dem in Fig. 3 gezeigten Ausführungsbeispiel ist der Gassensor 1 als Kelvin-Sonde ausgestaltet. Die gassensitive Schicht 7 ist auf einem elektrisch leitenden Träger 14 angeordnet und weist an ihrer dem Träger 14 abgewandten Seite einen Oberflächenbereich 9 auf, an den das Zielgas adsorbieren kann. Der Oberflächenbereich 9 ist durch einen Luftspalt 8 von einer Elektrode 15 beabstandet und bildet mit dieser eine elektrische Kapazität.

Die Elektrode 15 kann mit Hilfe eines in der Zeichnung nicht näher dargestellten Aktors in Schwingungen versetzt werden. Dabei bewegt sich die Elektrode 15 entsprechend dem Pfeil Pf abwechselnd auf die gassensitive Schicht 7 zu- und von dieser weg. Die Elektrode 15 und der Träger 14 bzw. die gassensitive Schicht 7 sind mit Anschlüssen 16 einer Auswerte- und Ansteuereinrichtung 17 verbunden. Diese hat einen in der Zeichnung nicht näher dargestellten Potentialsensor, der zur Messung der elektrischen Spannung zwischen der gassensitiven Schicht 7 und der Elektrode 15 mit den Anschlüssen 16 verbunden ist. Die Auswerte- und Ansteuereinrichtung 17 weist außerdem eine mit dem Potentialsensor in Steuerverbindung stehende, verstellbare Spannungsquelle auf, mittels der eine Gegenspannung zwischen den Potentialsensor und die Elektrode 15 und/oder den Träger 14 anlegt wird. Die Gegenspannung wird so gewählt, dass das von dem Potentialsensor gemessene Potential im Mittel gleich null ist. Alternativ kann auch direkt die durch die Schwingung verursachte Änderung der elektrischen Kapazität zwischen der Elektrode 15 und dem Träger 14 gemessen werden, beispielsweise indem der zwischen der Elektrode 15 und dem Träger 14 fließende elektrische Strom gemessen wird.

Der Oberflächenbereich 9 der gassensitiven Schicht 7 ist bei jedem der in Fig. 1-3 gezeigten Ausführungsbeispiele jeweils durch Aussparungen strukturiert, in denen jeweils ein elektrisch leitend mit der gassensitiven Schicht verbundenes flächiges Werkstoffelement 18 angeordnet ist. Der Werkstoff der Werkstoffelemente 18 unterscheidet sich von dem der gassensitiven Schicht 7 und enthält vorzugsweise Kupfer und/oder Silber.

Die mit dem Zielgas in Kontakt bringbare, an den Kanalbereich 5 kapazitiv gekoppelte Oberfläche der gassensitiven Schicht 7 ist größer als 1% und kleiner als 99,999% der Gesamtoberfläche, bestehend aus der Oberfläche der gassensitiven Schicht und derjenigen der Werkstoffelemente 18.

Der mit dem Zielgas in Kontakt bringbare Oberflächenbereich 9 der gassensitiven Schicht 7 ist so strukturiert, dass der Oberflächenbereich 9 an keiner Stelle weiter als 500 µm von einem Werkstoffelement 18 entfernt ist.

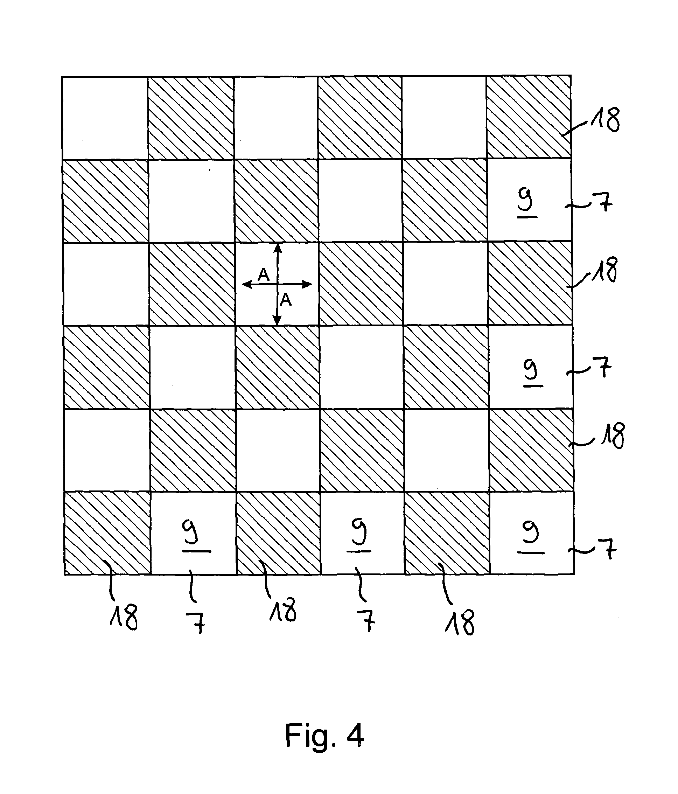

Bei dem in Fig. 4 gezeigten Ausführungsbeispiel ist die gassensitive Schicht 7 schachbrettartig strukturiert. Deutlich ist erkennbar, dass der mit dem Zielgas in Kontakt bringbare Oberflächenbereich 9 der gassensitiven Schicht 7 in eine Vielzahl von quadratischen Abschnitten unterteilt ist, die in mehreren Reihen und Spalten auf Lücke zueinander versetzt sind. In den Zwischenräumen zwischen zwei zueinander benachbarten Abschnitten der der gassensitiven Schicht 7 ist jeweils ein Werkstoffelement 18 angeordnet, dessen Oberflächenabmessungen denen der Abschnitte entspricht. Der Abstand A zweier zueinander benachbarter Werkstoffelemente 18 beträgt zwischen 100 nm und 500 µm. Das Flächenverhältnis der Gesamtoberfläche der Werkstoffelemente 18 zum Oberflächenbereich 9 der gassensitiven Schicht 7 beträgt 1:1.

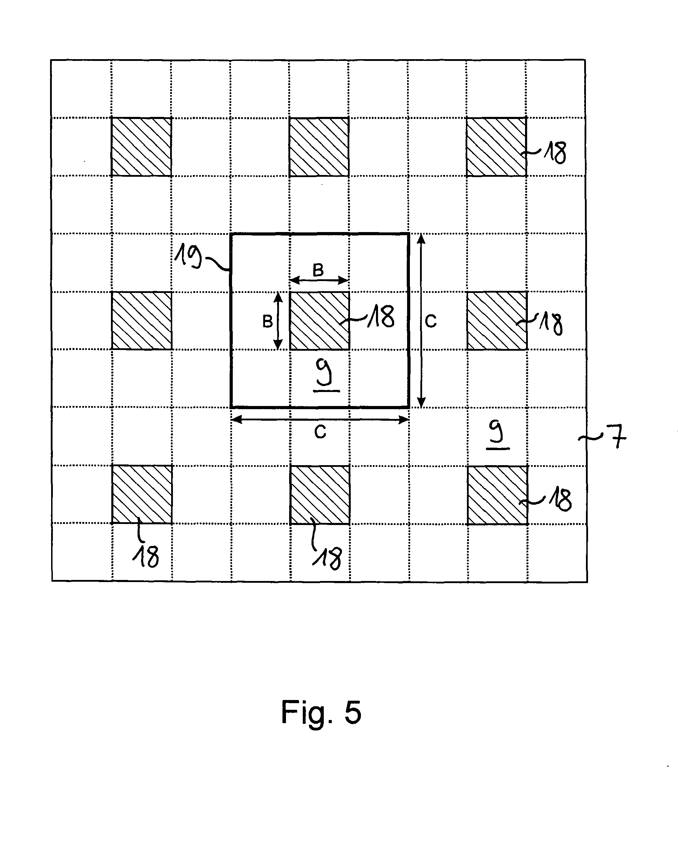

Bei dem in Fig. 5 gezeigten Ausführungsbeispiel sind die Werkstoffelemente 18 nach allen Seiten durch den zwischen ihnen befindlichen, mit dem Zielgas in Kontakt bringbaren Oberflächenbereich 9 der gassensitiven Schicht 7 voneinander beabstandet.

Deutlich ist erkennbar, dass die aus dem Oberflächenbereich 9 und den Werkstoffelementen 18 gebildete Struktur mehrere übereinstimmende Einheitsstrukturbereiche 19 mit etwa quadratischer Außenkontur aufweist. Jeder Einheitsstrukturbereich 19 umfasst jeweils ein Werkstoffelement 18 und einen Abschnitt des Oberflächenbereichs 9 der gassensitiven Schicht 7, der das Werkstoffelement 18 rahmenförmig umgrenzt. Zueinander benachbarte Einheitsstrukturbereiche 19 grenzen mit den Abschnitten der Oberflächenbereiche 9 direkt und unterbrechungsfrei aneinander an, so dass sich ein durchgehender, mit dem Zielgas in Kontakt bringbarer Oberflächenbereich 9 ergibt. Das Flächenverhältnis der Gesamtoberfläche der Werkstoffelemente 18 zum Oberflächenbereich 9 der gassensitiven Schicht 7 beträgt B²/(C²-B²), wobei B die Kantenlänge der Werkstoffelemente 18 und C die Kantenlänge der Einheitsstrukturbereiche 19 ist.

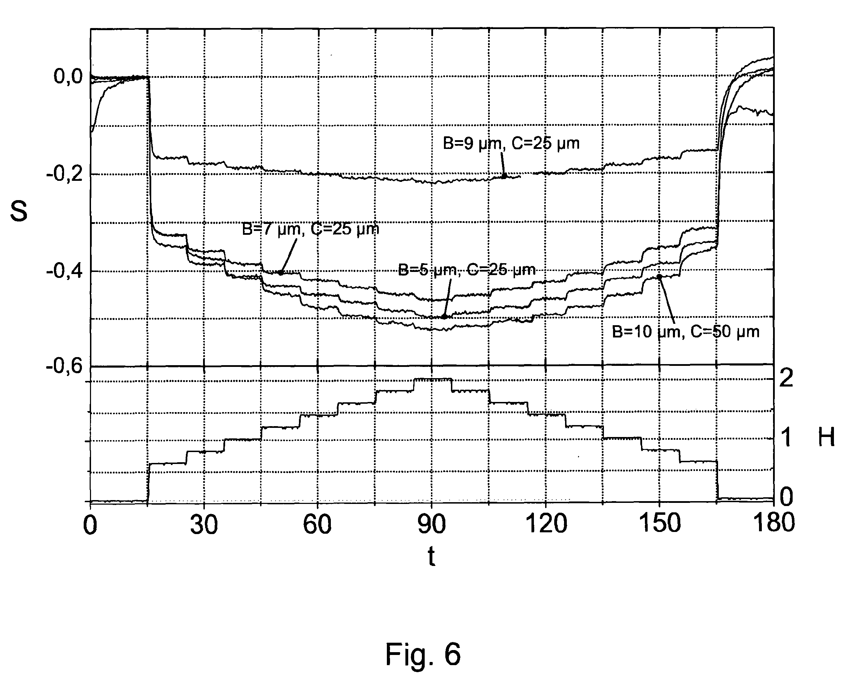

In Fig. 6 ist das Messsignal einer Kelvin-Sonde für unterschiedliche Abmessungen B, C (siehe Fig. 5) der Struktur der gassensitiven Schicht 7 graphisch dargestellt, wobei die Konzentration des Zielgases stufenförmig von etwa null auf einen Maximalwert erhöht und danach stufenförmig auf etwa null reduziert wird. Deutlich ist erkennbar, dass die Amplitude des Messsignals von den Abmessungen der Struktur abhängig ist und dass mit den Werten B = 10 µm und C = 50 µm die größte Sensitivität erreicht wird.

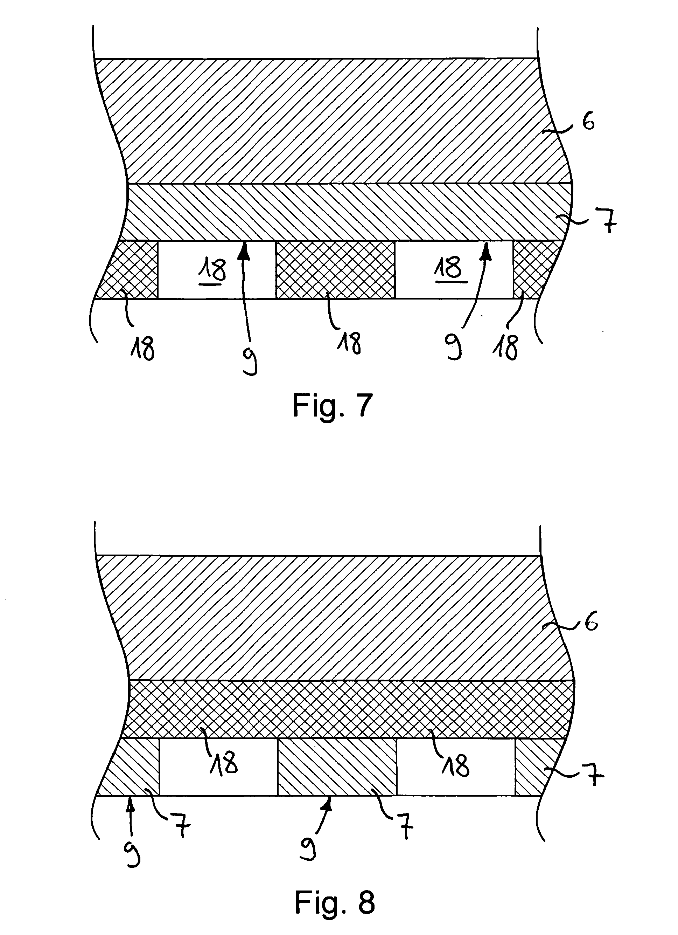

In Fig. 7 ist erkennbar, dass die gassensitive Schicht 7 auf dem Trägerteil 6 und die Werkstoffelemente 18 auf der gassensitiven Schicht 7 angeordnet sind. Die gassensitive Schicht 7 verläuft unterbrechungsfrei auf dem Trägerteil 6. Die gassensitive Schicht 7 haftet an dem Trägerteil 6 und die Werkstoffelemente 18 haften an der gassensitiven Schicht 7. Die Dicke der Werkstoffelemente 18 beträgt zwischen der 0,1-fachen Dicke einer Monolage und 10 µm. Bei Bedarf kann zwischen dem Trägerteil 6 und der gassensitiven Schicht 7 und/oder zwischen dieser und den Werkstoffelementen 18 eine Haftvermittlerschicht angeordnet sein.

Es ist aber auch möglich, dass die Werkstoffelemente 18 auf dem Trägerteil 6 und die gassensitive Schicht 7 auf einer die Werkstoffelemente 18 aufweisenden Metallschicht angeordnet ist, wie dies in Fig. 8 gezeigt ist. Die Werkstoffelemente 18 sind dabei durch Abschnitte einer durchgehenden Metallschicht gebildet. Die Metallschicht haftet an dem Trägerteil 6 und die gassensitive Schicht 7 an der Metallschicht. Bei Bedarf kann zwischen dem Trägerteil 6 und der Metallschicht und/oder zwischen dieser und der gassensitiven Schicht 7 eine Haftvermittlerschicht angeordnet sein.

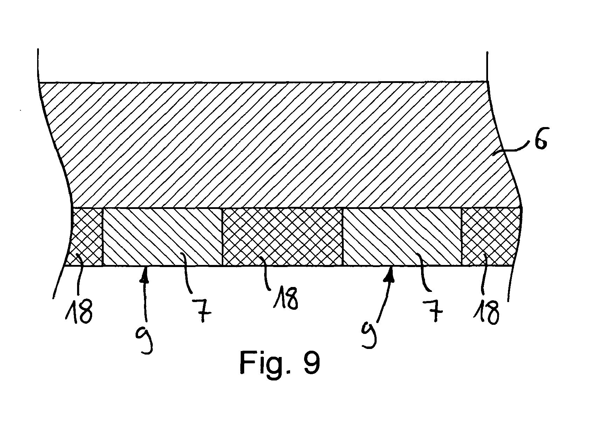

In Fig. 9 ist erkennbar, dass die gassensitive Schicht 7 und die Werkstoffelemente 18 auch nebeneinander auf dem Trägerteil 6 angeordnet sein können. Seitlich grenzen die Werkstoffelemente 18 an die gassensitive Schicht 7 an. Die gassensitive Schicht 7 und die Werkstoffelemente 18 haften jeweils direkt an der Oberfläche des Trägerteils 6. Auch hier kann zwischen dem Trägerteil 6 und der gassensitiven Schicht 7 bzw. den Werkstoffelementen 18 eine Haftvermittlerschicht vorgesehen sein.

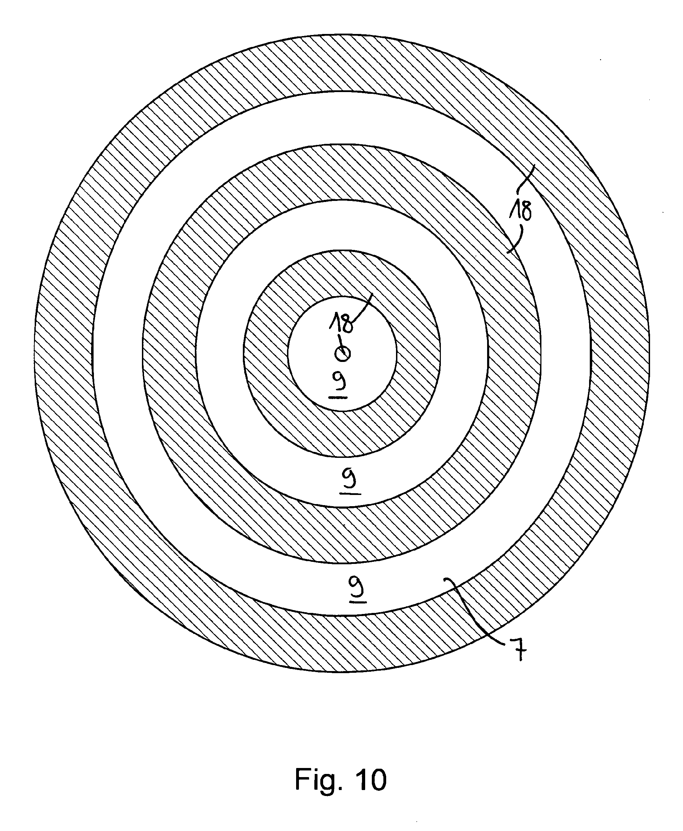

In Fig. 10 ist ein weiteres Ausführungsbeispiel gezeigt, bei dem der mit dem Zielgas in Kontakt bringbare Oberflächenbereich 9 der gassensitiven Schicht Ringe aufweist, zwischen denen ringförmige Werkstoffelemente 18 angeordnet sind. Die Ringe des Oberflächenbereichs 9 und die Werkstoffelemente 18 sind dabei etwa konzentrisch zueinander angeordnet.

## Patentansprüche

1. Gassensor (1) mit mindestens einer gassensitiven, elektrisch leitfähigen Schicht (7), die einen mit einem Zielgas in Kontakt bringbaren Oberflächenbereich (9) aufweist in dem die Austrittsarbeit von der Konzentration des damit in Kontakt stehenden Zielgases abhängig ist, und mit zumindest einem über einen Luftspalt (8) kapazitiv an den Oberflächenbereich (9) gekoppelten elektrischen Potentialsensor, **dadurch gekennzeichnet, dass** der Oberflächenbereich (9) durch mindestens eine Aussparung strukturiert ist, in der ein elektrisch leitend mit der gassensitiven Schicht (7) verbundenes flächiges Werkstoffelement (18) angeordnet ist, dessen Werkstoff sich von dem der gassensitiven Schicht (7) unterscheidet und mindestens ein Metall und/oder mindestens eine ein Metall enthalte chemische Verbindung umfasst.

2. Gassensor (1) nach Anspruch 1, **dadurch gekennzeichnet, dass** das mindestens eine Metall Silber und/oder Kupfer umfasst.

3. Gassensor (1) nach Anspruch 1 oder 2, **dadurch gekennzeichnet, dass** das mindestens eine Metall Eisen, Zinn, Blei, Nickel, Zink und/oder Kobalt umfasst.

4. Gassensor (1) nach einem der Ansprüche 1 bis 3, **dadurch gekennzeichnet, dass** der mit dem Zielgas in Kontakt bringbare Oberflächenbereich (9) der gassensitiven Schicht (7) größer ist als 1 %, gegebenenfalls größer ist als 5% und insbesondere größer ist als 10% der mit dem Zielgas in Kontakt bringbaren Oberfläche des mindestens einen innerhalb der mindestens einen Aussparung befindlichen Werkstoffelements (18).

5. Gassensor (1) nach einem der Ansprüche 1 bis 4, **dadurch gekennzeichnet, dass** die mit dem Zielgas in Kontakt bringbare Oberfläche des mindestens einen innerhalb der mindestens einen Aussparung befindlichen Werkstoffelements (18) größer ist als 0,001 %, gegebenenfalls größer ist als 0,1 % und insbesondere größer ist als 10% des mit dem Zielgas in Kontakt bringbaren Oberflächenbereichs (9) der gassensitiven Schicht.

6. Gassensor (1) nach einem der Ansprüche 1 bis 5, **dadurch gekennzeichnet, dass** der mit dem Zielgas in Kontakt bringbare Oberflächenbereich (9) derart strukturiert ist, dass der Oberflächenbereich (9) an keiner Stelle weiter als 500 µm, gegebenenfalls weiter als 300 µm und insbesondere weiter als 100 µm von dem mindestens einen Werkstoffelement (18) entfernt ist.

7. Gassensor (1) nach einem der Ansprüche 1 bis 6, **dadurch gekennzeichnet, dass** die aus dem Oberflächenbereich (9) und dem mindestens einen Werkstoffelement (18) gebildete Struktur mindestens zwei übereinstimmende Einheitsstrukturbereiche (19) aufweist, die seitlich aneinander angrenzen und jeweils mindestens ein Werkstoffelement (18) und einen Abschnitt des Oberflächenbereichs (9) der gassensitiven Schicht (7) umfassen.

8. Gassensor (1) nach einem der Ansprüche 1 bis 7, **dadurch gekennzeichnet, dass** mindestens zwei der Werkstoffelemente (18) durch einen dazwischen befindlichen Teilbereich der gassensitiven Schicht (7) seitlich voneinander beabstandet sind, und dass der Abstand der Werkstoffelemente (18) mindestens 50 nm, gegebenenfalls mindestens 75 nm und vorzugsweise mindestens 100 nm beträgt.

9. Gassensor (1) nach einem der Ansprüche 1 bis 8, **dadurch gekennzeichnet, dass** die Dicke der flächigen Werkstoffelemente (18) mindestens der 0,1-fache Dicke einer Monolage und höchstens 10 µm beträgt.

10. Gassensor (1) nach einem der Ansprüche 1 bis 9, **dadurch gekennzeichnet, dass** das mindestens eine Werkstoffelement (18) auf der gassensitiven Schicht (7) angeordnet ist.

11. Gassensor (1) nach einem der Ansprüche 1 bis 10, **dadurch gekennzeichnet, dass** die gassensitive Schicht (7) auf einer Metallschicht angeordnet ist, und dass mindestens ein nicht von der gassensitiven Schicht (7) überdeckter Teilbereich der Metallschicht das mindestens eine Werkstoffelement (18) bildet.

12. Gassensor (1) nach einem der Ansprüche 1 bis 11, **dadurch gekennzeichnet, dass** zwischen dem mindestens einen Werkstoffelement (18) und der gassensitiven Schicht (7) eine Haftvermittlerschicht angeordnet ist.

13. Gassensor (1) nach einem der Ansprüche 1 bis 12, **dadurch gekennzeichnet, dass** das Zielgas ein reduzierendes Gas ist, insbesondere Wasserstoff

14. Gassensor (1) nach einem der Ansprüche 1 bis 13, **dadurch gekennzeichnet, dass** der Potentialsensor ein Feldeffekttransistor ist, der ein Substrat aufweist auf dem eine Drain (3) und eine Source (4) angeordnet sind, dass zwischen Drain (3) und Source (4) ein Kanalbereich (5) gebildet ist, und dass der Kanalbereich (5) direkt über den Luftspalt (8) oder indirekt über eine mit dem Kanalbereich (5) zusammenwirkende Gateelektrode (11) und eine mit der Gateelektrode (11) leitend verbundene Sensorelektrode (13) kapazitiv an den Oberflächenbereich (9) der gassensitiven Schicht (7) gekoppelt ist.

15. Gassensor (1) nach einem der Ansprüche 1 bis 14, **dadurch gekennzeichnet, dass** er als Kelvinsonde ausgestaltet ist, bei welcher der Potentialsensor über eine durch den Luftspalt (8) von dem Oberflächenbereich (9) der gassensitiven Schicht (7) beabstandete, auf die gassensitive Schicht (7) zu- und von dieser wegbewegbaren Elektrode (15) kapazitiv an den Oberflächenbereich (9) der gassensitiven Schicht (7) gekoppelt ist.

## Geänderte Patentansprüche

### Geänderte Patentansprüche gemäss Regel 137(2) EPÜ.

**1.** Gassensor (1) mit mindestens einer gassensitiven, elektrisch leitfähigen Schicht (7), die einen mit einem Zielgas in Kontakt bringbaren Oberflächenbereich (9) aufweist, in dem die Austrittsarbeit von der Konzentration des damit in Kontakt stehenden Zielgases abhängig ist, und mit zumindest einem über einen Luftspalt (8) kapazitiv an den Oberflächenbereich (9) gekoppelten elektrischen Potentialsensor, wobei der Oberflächenbereich (9) durch mindestens eine Aussparung strukturiert ist, in, auf oder unter der ein elektrisch leitend mit der gassensitiven Schicht (7) verbundenes flächiges WerkstofFelement (18) angeordnet ist, dessen Werkstoff sich von dem der gassensitiven Schicht (7) unterscheidet und mindestens ein Metall und/oder mindestens eine ein Metall enthalte chemische Verbindung umfasst, und wobei die aus dem Oberflächenbereich (9) und dem mindestens einen Werkstoffelement (18) gebildete Struktur mindestens zwei übereinstimmende Einheitsstrukturbereiche (19) aufweist, die seitlich aneinander angrenzen und jeweils mindestens ein Werkstoffelement (18) und einen Abschnitt des Oberflächenbereichs (9) der gassensitiven Schicht (7) umfassen.

**2.** Gassensor (1) nach Anspruch 1, **dadurch gekennzeichnet, dass** das mindestens eine Metall Silber und/oder Kupfer umfasst.

**3.** Gassensor (1) nach Anspruch 1 oder 2, **dadurch gekennzeichnet, dass** das mindestens eine Metall Eisen, Zinn, Blei, Nickel, Zink und/oder Kobalt umfasst.

**4.** Gassensor (1) nach einem der Ansprüche 1 bis 3, **dadurch gekennzeichnet, dass** der mit dem Zielgas in Kontakt bringbare Oberflächenbereich (9) der gassensitiven Schicht (7) größer ist als 1 %, gegebenenfalls größer ist als 5% und insbesondere größer ist als 10% der mit dem Zielgas in Kontakt bringbaren Oberfläche des mindestens einen innerhalb der mindestens einen Aussparung befindlichen Werkstoffelements (18).

**5.** Gassensor (1) nach einem der Ansprüche 1 bis 4, **dadurch gekennzeichnet, dass** die mit dem Zielgas in Kontakt bringbare Oberfläche des mindestens einen innerhalb der mindestens einen Aussparung befindlichen Werkstoffelements (18) größer ist als 0,001 %, gegebenenfalls größer ist als 0,1 % und insbesondere größer ist als 10% des mit dem Zielgas in Kontakt bringbaren Oberflächenbereichs (9) der gassensitiven Schicht.

**6.** Gassensor (1) nach einem der Ansprüche 1 bis 5, **dadurch gekennzeichnet, dass** der mit dem Zielgas in Kontakt bringbare Oberflächenbereich (9) derart strukturiert ist, dass der Oberflächenbereich (9) an keiner Stelle weiter als 500 µm, gegebenenfalls weiter als 300 µm und insbesondere weiter als 100 µm von dem mindestens einen Werkstoffelement (18) entfernt ist.

**7.** Gassensor (1) nach einem der Ansprüche 1 bis 6, **dadurch gekennzeichnet, dass** mindestens zwei der Werkstoffelemente (18) durch einen dazwischen befindlichen Teilbereich der gassensitiven Schicht (7) seitlich voneinander beabstandet sind, und dass der Abstand der Werkstoffelemente (18) mindestens 50 nm, gegebenenfalls mindestens 75 nm und vorzugsweise mindestens 100 nm beträgt.

**8.** Gassensor (1) nach einem der Ansprüche 1 bis 7, **dadurch gekennzeichnet, dass** die Dicke der flächigen Werkstoffelemente (18) mindestens der 0,1-fache Dicke einer Monolage und höchstens 10 µm beträgt.

**9.** Gassensor (1) nach einem der Ansprüche 1 bis 8, **dadurch gekennzeichnet, dass** die gassensitive Schicht (7) auf einer Metallschicht angeordnet ist, und dass mindestens ein nicht von der gassensitiven Schicht (7) überdeckter Teilbereich der Metallschicht das mindestens eine Werkstoffelement (18) bildet.

**10.** Gassensor (1) nach einem der Ansprüche 1 bis 9, **dadurch gekennzeichnet, dass** zwischen dem mindestens einen Werkstoffelement (18) und der gassensitiven Schicht (7) eine Haflvermittlerschicht angeordnet ist.

**11.** Gassensor (1) nach einem der Ansprüche 1 bis 10, **dadurch gekennzeichnet, dass** das Zielgas ein reduzierendes Gas ist, insbesondere Wasserstoff

**12.** Gassensor (1) nach einem der Ansprüche 1 bis 11, **dadurch gekennzeichnet, dass** der Potentialsensor ein Feldeffekttransistor ist, der ein Substrat aufweist, auf dem eine Drain (3) und eine Source (4) angeordnet sind, dass zwischen Drain (3) und Source (4) ein Kanalbereich (5) gebildet ist, und dass der Kanalbereich (5) direkt über den Luftspalt (8) oder indirekt über eine mit dem Kanalbereich (5) zusammenwirkende Gateelektrode (11) und eine mit der Gateelektrode (11) leitend verbundene Sensorelektrode (1 3) kapazitiv an den Oberflächenbereich (9) der gassensitiven Schicht (7) gekoppelt ist.

**13.** Gassensor (1) nach einem der Ansprüche 1 bis 12, **dadurch gekennzeichnet, dass** er als Kelvinsonde ausgestaltet ist, bei welcher der Potentialsensor über eine durch den Luftspalt (8) von dem Oberflächenbereich (9) der gassensitiven Schicht (7) beabstandete, auf die gassensitive Schicht (7) zu- und von dieser wegbewegbaren Elektrode (15) kapazitiv an den Oberflächenbereich (9) der gassensitiven Schicht (7) gekoppelt ist.
